# EUROPEAN PATENT SPECIFICATION

(11) **EP 4 055 255 B1**
(45) Date of publication and mention of the grant of the patent: **23.08.2023**
(21) Application number: 20800154.5
(22) Date of filing: 05.11.2020
(51) Int. Cl.: F02B 67/04, B60K 25/00, H02K 7/18, F02B 63/04

(54) **INTEGRATED ELECTRIC ENERGY PRODUCTION SYSTEM**
INTEGRIERTES ELEKTRISCHES ENERGIEERZEUGUNGSSYSTEM
SYSTÈME INTÉGRÉ DE PRODUCTION D'ÉNERGIE ÉLECTRIQUE

(30) Priority: 06.11.2019 IT 201900020460
(43) Date of publication of application: 14.09.2022
(73) Proprietor: CNH Industrial Italia S.p.A., 10156 Torino (IT)
(72) Inventor: D'EPIRO, Clino, 10091 ALPIGNANO (TO) (IT)
(74) Representative: CNH Industrial IP Department
(86) International application number: PCT/EP2020/081053
(87) International publication number: WO 2021/089670

(56) References cited:
- GB-A- 1 416 741
- JP-A- 2006 325 499
- US-A1- 2014 117 676

## Description

### Field of the application

The present invention relates to an integrated System for the production of electric energy.

### State of the art

A farm needs electricity and heat. Electricity is used to illuminate the rooms, stables and plants grown in greenhouses, to operate irrigation pumps and to operate any packaging lines for agricultural products. Heat, on the other hand, makes it possible to modify the production cycles of plants in the greenhouse and to heat the stables. The most advanced, large-scale realities involve the generation of biogas from agro-industry waste, such as chopped corn, sorghum, etc...

The waste is deposited in special wells to induce fermentation, from which a mixture of methane-based gas is released.

The biogas produced feeds generating sets and/or burners, respectively to produce electricity and/or heat. The electricity production plant consists of generating sets, which include internal combustion engines coupled to electric generators. The electricity produced in low voltage is possibly boosted to medium voltage and conveyed to the distribution network.

A high-temperature burner burns the biogas generating heat for the stables, etc. Each biogas plant must also be equipped with a torch to burn any excess biogas.

These plants are intended for medium and large farms or groups of consortium farms. A single small or medium farm hardly has the resources to create an autonomous system to produce electricity and heat as described above.

Therefore, the resources are expended for purchasing agricultural machinery, greenhouses, processing and packaging machines, while at least the electric energy is purchased.

If not specifically excluded in the detailed description below, what is described in this chapter is to be considered as an integral part of the detailed description.

### Summary of the invention

The purpose of the present invention is to allow even medium and small farms to produce electricity on their own.

The basic idea of the present invention provides for the use of an agricultural vehicle also for the generation of electricity and heat within a farm, optionally providing storage systems for the periods in which the agricultural vehicle is not available.

This idea starts from the previous observation that agricultural vehicles are used on farms for different uses, all related to soil treatment, for sowing and sometimes for spraying crops, for an average of 600/900 hours per year, remaining substantially inactive for the remaining time.

Therefore, the idea is to use the agricultural vehicle continuously both for dynamic tasks, i.e. to perform tasks related to soil treatment, and for static tasks, i.e. to generate electricity and optionally heat. This is known from document GB1416741.

According to the present invention, a farm is equipped with a coupling station with the agricultural vehicle.

The coupling station includes an electric generator and an electric generator input shaft configured to be connected to the rear PTO of the agricultural vehicle.

The energy generated by the electric generator powers or contributes to powering the farm.

According to a preferred variant of the invention, the coupling station also includes a heat recovery circuit from the exhaust gases produced by the internal combustion engine of the agricultural vehicle.

According to a preferred variant of the invention which can be combined with any of the previous variants, the agricultural vehicle comprises a liquid/liquid heat exchanger, having a first circulation branch operatively connected to the refrigeration circuit of the internal combustion engine of the agricultural vehicle and equipped with a second circulation branch that can be connected to a liquid circuit outside of the vehicle to supply heat to the farm.

According to a preferred variant of the invention which is based on the recovery of heat from the exhaust gases and from the cooling circuit, it is envisaged to use the heat extracted from the cooling circuit to pre-heat the liquid outside the vehicle and to heat it with the heat extracted from the exhausted gas.

According to the invention, the coupling station comprises a processing unit which can be connected to the vehicle data network of the agricultural vehicle, so that the processing unit of the coupling station can operationally interface with the engine control unit of the agricultural vehicle by monitoring some vehicle parameters and to issue at least one of the commands described below.

According to a further preferred variant that is combined with any of the previous variants, the processing unit of the coupling station is equipped with means for storing the electrical energy and preferably also the heat generated so as to be able to at least partially satisfy the needs of the farm while the agricultural vehicle is involved in dynamic tasks.

According to a preferred variant which is based on the previous variant, the processing unit of the coupling station is configured to schedule the accumulation of the electrical energy and possibly also of the heat and preferably, this scheduling is carried out considering the accumulation efficiency and production efficiency.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figures 1 and 2 schematically show an agricultural vehicle connected to a coupling station;
Figure 3 shows the power supply of static users of energy produced thanks to the configuration of Figures 1 and 2;
Figure 4 shows a preferred variant of the invention according to which the coupling station allows the recovery of heat contained by the exhaust gas produced by the internal combustion engine of the vehicle of the previous figures;
Figure 5 shows a preferred variant of a cooling circuit of the internal combustion engine of the agricultural vehicle of the previous figures;
Figure 6 shows an example of a heating circuit of a production plant, which integrates components shown in Figures 4 and 5.

The same reference numbers and letters in the figures identify the same elements or components or functions.

In the context of this description, the term "second" component does not imply the presence of a "first" component. These terms are in fact used as labels to improve clarity and should not be understood in a limiting way.

The elements and features illustrated in the various preferred embodiments, including the drawings, can be combined with each other without however departing from the scope of this application as described below.

### Detailed description of exemplary embodiments

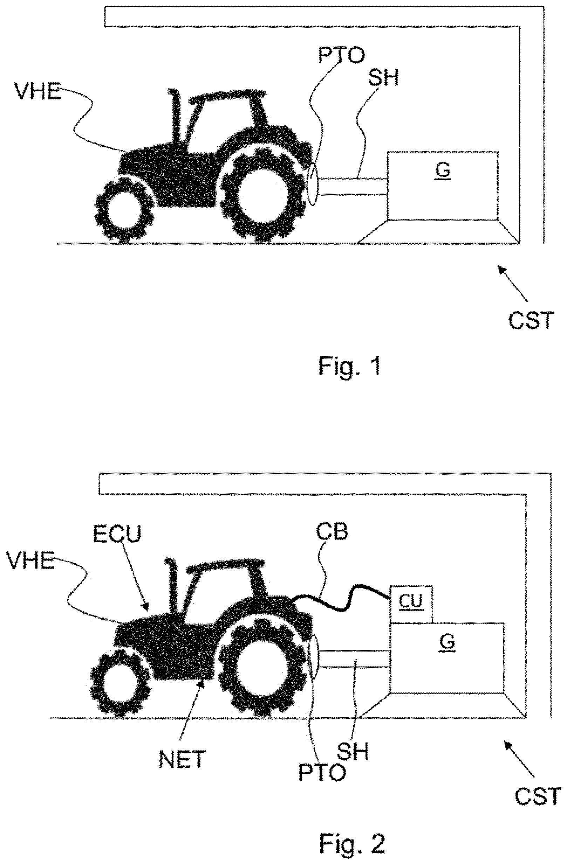

The present invention is described with the help of figures 1 - 6.

The integrated electricity production system according to the present invention comprises a fixed coupling station CST and an agricultural vehicle VHE equipped with an internal combustion engine E.

The station comprises an electric generator G having a rotor operatively connected to a transmission shaft SH equipped with a flange, so that the flange can be connected to a power take-off, called PTO, of the agricultural vehicle VHE to drive the rotor of the electric generator G.

The engines of agricultural vehicles generally have powers ranging from 35 kW to 500kW.

In the last years, some vehicles are equipped with powerful electric generator to actuate electric appliances instead of traditional hydraulic ones. Therefore, it cannot be excluded that the electric generator is part of the vehicle instead of the fixed station. Nevertheless, the station can be equipped with electric means to permit the electrical connection with the vehicle and any safety system thereof.

In stationary conditions, all the power generated by the internal combustion engine can be converted into electrical energy, therefore, the generator G can have a nominal power equal to that of the internal combustion engine or slightly lower, considering that for short periods the generator can generate an electrical power even higher than its nominal power, without damage risks.

When the agricultural vehicle is operationally connected to the fixed connection station, it is advisable to prevent the vehicle from being able to move, with the risk of damaging the SH transmission shaft interposed between the PTO and the shaft of the electric generator.

At the same manner, when the powerful electric generator is part of the vehicle, the vehicle should remain still in order to avoid any damage to the electric cables and any further operative connection described below.

For this reason, according to the invention, the fixed station comprises processing means CU operatively connected to the electric generator, for example to control its operation, and comprising a data cable CB connectable to the vehicular data network NET on board the VHE farm vehicle.

In agricultural vehicles, there are at least ECU processing means for controlling the internal combustion engine of the same agricultural vehicle. In some cases, the vehicle is equipped with an engine control unit and also with a vehicle control unit that controls and/or monitors other vehicle devices, such as for example the after-treatment device for the exhaust gases produced by the internal combustion engine E and/or to manage the air conditioning system of a vehicle cabin and/or to manage a gearbox placed on the vehicle transmission and/or to manage the vehicle brakes, etc ...

The presence of a further vehicle processing unit is optional, since the various on-board functions can be managed by the ECU unit responsible for controlling the internal combustion engine.

The communications between the on-board processing unit (s) and the various on-board sensors are made through a data network, typically of the CAN bus type, through which it is possible to control and/or monitor the various on-board devices including those listed above.

According to the invention, the processing unit CU of the fixed station interfaces with the vehicle network by taking control of the vehicle.

Therefore, the CU processing unit are configured to interface with the ECU and/or vehicle processing unit, installed on board the agricultural vehicle to command the execution of at least one of the following procedures:
- activation of the vehicle parking brake,
- activation of the internal combustion engine (E) of the vehicle,
- shutdown of the internal combustion engine (E) of the vehicle,
- monitoring of a vehicle transmission, by commanding a shutdown or inhibition of ignition of the internal combustion engine when a vehicle transmission is engaged,
- monitoring of a vehicle transmission, commanding a shift in neutral and inhibiting a shift in travel configuration before an activation of the internal combustion engine of the vehicle. Preferably, the processing means CU are configured to perform all the procedures listed above,
- monitor the water and exhaust gasses temperature in order to assure the proper operation of the after treatment system.

In other words, once the vehicle is placed in the fixed station, the cable band CB is connected and therefore the processing unit CU commands the vehicle to activate the parking brakes, place the gearbox in neutral and inhibit any running condition, engine starting.

In addition, the processing unit CU can also replace the signal generated by the vehicle accelerator pedal in order to control the operating point of the internal combustion engine in relation to the electricity generation needs dictated by the electrical users EUT1, EUT2, etc... connected to an EPN electricity network of the farm, powered by generator G of the fixed station.

In some cases, the vehicular processing means are equipped with an autonomous control that allows them to manage the operating point in relation to the resistant torque offered to the PTO. In this case, it could be avoided to configure the processing means CU so as to control the operating point of the internal combustion engine E.

Nevertheless, having a controller interfaced directly with the electric generator is advantageous, since by monitoring the phase or phase-to-phase voltages of the generator, it is possible to control the internal combustion engine very quickly, which has clearly slower dynamics with respect to the fluctuations of the electrical load on the electrical network EPN.

The processing means CU are preferably configured to impose on said internal combustion engine an optimal operating point as a function of an electric power required, i.e. absorbed, by at least one electric user (EUT1, EUT2, ...) operatively connected to the electric generator G through an EPN fixed electricity network.

As described above, according to a preferred aspect of the invention, the agricultural vehicle comprises an electric generator installed on board the same vehicle, capable of converting up to 50% of the power generated by the internal combustion engine.

This is not the classic alternator needed to power on-board services, which can also be present. Instead, it is a generator, called "power", able to power an appliance (or Implement), namely a machine that can be associated with the agricultural vehicle to perform the treatment of the soil, evidently in dynamic conditions of the same agricultural vehicle. An appliance, for example, is a device suitable for sowing. The electrical appliances, unlike the hydraulic ones, allow greater precision in the execution of work and greater energy efficiency. For this reason, it is expected that in the future there will be a transition from hydraulic or pneumatic drive to an electric drive of soil treatment devices. For this reason, an electric generator on board the vehicle is expected to be installed, called "power" as it is expected to be able to convert up to 50% of the power generated by the internal combustion engine, in contrast to the usual small electric generator normally present in any self-propelled vehicle. Unlike that provided in the fixed coupling station described above, the power generator installed on board the vehicle cannot convert more than 50% of the available power as the remaining power must remain available for the vehicle transmission for the simultaneous movement of the agricultural vehicle.

Therefore, it can be envisaged that there are two electric power generators, one installed in the fixed station and one on board the agricultural vehicle.

It is evident that the vehicle must be equipped with a power socket, while the fixed station is equipped with an electrical connection cable (not shown) to connect this socket, on board the vehicle, to connect the electrical power network EPN of the farm to this electrical power generator.

According to a variant of the invention not claimed, the fixed coupling station is not equipped with its own electric power generator, exploiting the power one installed in the agricultural vehicle. Optionally, power converters can be present to adapt the generated voltages and frequencies to the needs of the network EPN. The present variant is combined with any of the details described above with the only difference consisting in the fact that the electric generator G is installed on the vehicle instead of in the fixed coupling station. This obviously does not comprise a transmission shaft, but the processing means and any of the details shown in the variants described below.

It should be understood that when the power generator is only capable to convert about 50% of the engine power into electricity, the engine itself can be controlled to deliver more heat to the exhaust gasses of cooling water. Such strategies are known during warm up operations.

According to a preferred aspect of the invention which is combined with any of the variants described above, the fixed station comprises a first heat exchanger HTE inserted in a first EP and a second fluid circuit FL1, in which the first circuit is open and includes an exhaust gas pipe EP connectable to a vehicle muffler and the second circuit FL1 is able to circulate a carrier fluid through at least one thermal user (TUT1, TUT2,...).

In other words, the exhaust gas produced by the internal combustion engine E is circulated through the HTE heat exchanger, which, for example, can be useful for heating a greenhouse. Therefore, a carrier fluid is heated and circulated in a closed circuit which includes, for example, radiators TUT1 arranged in a greenhouse, or radiators to heat a biomass digester TUT2, etc ...

Evidently, the first circuit, circulating exhaust gas, relating to the exchanger HTE is open because it communicates with the external environment, releasing the exhausted gases after having recovered a relative thermal content.

The fixed station may comprise the aforementioned first heat exchanger HTE, as described above, and in addition the processing means CU is configured to control the internal combustion engine so as to obtain a predetermined thermal power available to said first heat exchanger. HTE.

It is in fact possible to worsen the volumetric efficiency of the engine supercharging system in order to increase the heat content in the exhaust.

In addition, or alternatively, the power grid EPN can also be equipped with electrical energy storage systems, for example a battery pack or an inertial accumulator equipped with one or more flywheels.

In this case, rather than worsening the volumetric efficiency of the internal combustion engine, the heat exchange between the internal combustion engine and the thermal users of the farm can be controlled by varying the operating point of the engine to induce an increase in the resisting torque due to over-production of electricity.

In fact, in the case of a significant thermal load it is relatively easy to achieve a target heat exchange, but when the electrical load is low it is difficult to obtain an adequate heat exchange due to the low temperatures of the exhaust gases produced by the internal combustion engine.

The CU processing unit of the fixed coupling station can be configured to control the operation of the electrical energy storage means in order to increase the load and therefore the production of electricity.

Alternatively, the farm can be equipped with electric heaters EUT1, in addition to other electric consumers EUT2, EUT3 ... The electric heaters allow to immediately trigger the heating process of a thermal consumer, for example a greenhouse, by moving the operating point of the combustion engine internal in until a predetermined temperature of the exhaust gases is reached. Therefore, in case of low electrical load, this can be controlled to obtain a predetermined heat exchange.

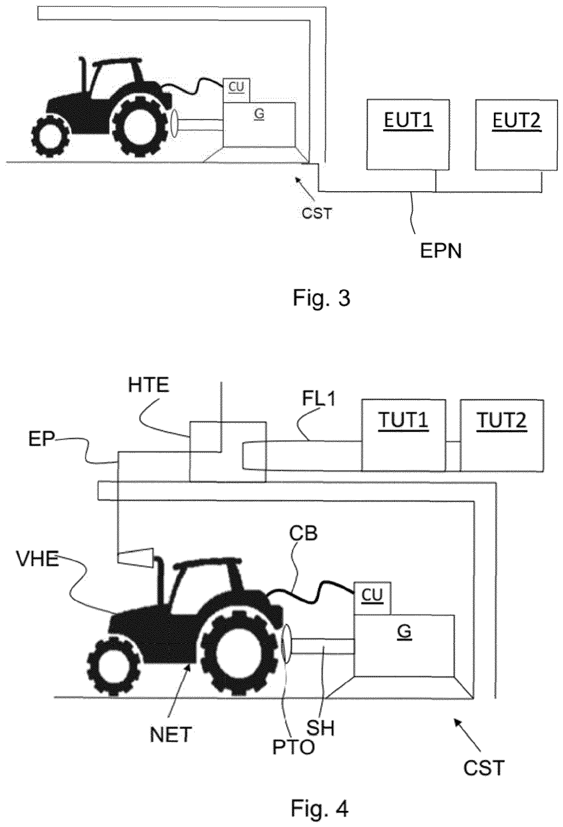

In other words, to obtain a predetermined thermal contribution from the internal combustion engine, in addition to the electrical users EUT2, EUT3, such as hydraulic pumps, machines for packaging agricultural products, machines for the transport of fodder, etc. the presence of one or more EUT1 electrical users can be provided, such as storage means or electrical heaters to move the operating point of the internal combustion engine until a predetermined heat exchange is obtained, necessary for the thermal users TUT1, etc ... See figures 3 and 4.

While the storage means have a limited capacity for storing electrical energy, electric heaters easily allow a predetermined objective, overall heat exchange to be achieved between the internal combustion engine and the thermal users, even when the electrical load is relatively low.

According to a preferred variant of the invention, the heat is extracted from the coolant circuit of the same internal combustion engine.

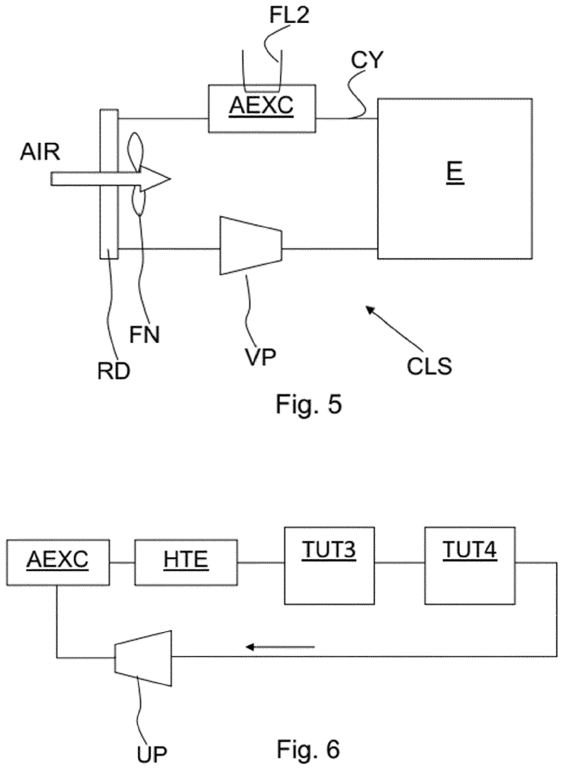

Figure 5 shows a refrigeration circuit CLS of the internal combustion engine E according to a preferred variant of the present invention.

An radiator RD equipped with a fan FN transfers the heat to the external environment. The radiator receives coolant fluid from the internal combustion engine E through the delivery duct CY and returns the coolant to the internal combustion engine E by means of a pump VP.

Generally, the delivery duct CY is arranged at a greater height than the pump VP to exploit a natural circulation of the coolant.

An heat exchanger AEXC of the liquid/liquid type is arranged on the delivery pipe CY, interposed between an output of the internal combustion engine E and an inlet of the radiator RD. In other words, the second exchanger AEXC is upstream of the radiator RD according to the direction of circulation of the coolant. This allows to keep the refrigerant temperature low, avoiding the activation of the fan FN and dissipation of useful heat into the atmosphere.

Since the refrigerant temperature is generally 90°C, the heat extracted from the CLS refrigeration circuit can be used in a thermal circuit FL2 independently of the thermal circuit FL1 which extracts the heat from the exhaust gases produced by the internal combustion engine.

Alternatively, as shown in Figure 6, the second heat exchanger AEXC can be used to preheat the carrier fluid while the first heat exchanger HTE performs a post heating of the same carrier fluid.

Preferably, the second heat exchanger AEXC comprises a pair of quick couplings to allow a connection of said second heat exchanger AEXC to a third circuit able to circulate a further liquid carrier, preferably pure water being non-harmfulness to account for the amounts of liquid carrier possibly lost in the detachment/refitting of the joints, through at least one further thermal user (TUT3, TUT4,...).

The use of the second exchanger is particularly advantageous, as it allows heat to be extracted from the circuit CLS without tampering with it.

Preferably, the second AEXC heat exchanger is arranged inside a vehicle engine compartment so as to be inaccessible from the outside without accessing the engine compartment. This can be advantageous to prevent the exchanger from becoming dusty when the agricultural vehicle is involved in soil treatment.

The second heat exchanger AEXC comprises a pair of quick couplings to allow a connection of said second heat exchanger (AEXC) to said second circuit (FL1) so that said carrier fluid, needed to heat at least one heat user TUT1, TUT2, ..., is preheated in said second heat exchanger AEXC and post-heated in said first heat exchanger (HTE) before being sent to said at least one user TUT1, TUT2,...

According to a preferred variant of the invention which can be combined with any of the previous variants, the fixed coupling station CST further comprises electrical energy storage means ES and/or thermal energy storage means HS and the processing means are configured for controlling an accumulation of electrical and/or thermal energy in said respective accumulation means. More specifically, the accumulation of electrical and/or thermal energy in the respective storage means can be determined according to the availability of the agricultural vehicle.

In other words, the accumulation of electrical and/or thermal energy can be subject to the use of the vehicle in dynamic conditions, that is, in those days in which the agricultural vehicle is used for soil treatment.

For example, the processing unit can be configured to acquire an agricultural vehicle availability calendar and control the operation of the internal combustion engine to accumulate electrical and/or thermal energy on days when the agricultural vehicle is not available for that purpose.

For example, supposing that the processing unit acquires an unavailability of the agricultural vehicle on the day following the current one, this can determine the electrical load to be offered to the internal combustion engine to accumulate a predetermined energy, optimizing the efficiency of the internal combustion engine itself. In other words, the operating point of the engine on the engine maps is determined not on the basis of a "current" power, but on the basis of an average power, averaged over a subinterval of the availability period of the agricultural vehicle.

For example, it can be envisaged to supply 90% of the rated power to the internal combustion engine in the last three hours of availability of the agricultural vehicle rather than 45% in the last six hours, since the efficiency could be better when the operating point approaches 90% of the rated power.

The present invention can be advantageously realized by means of a computer program which comprises coding means for carrying out one or more steps of the method, when this program is executed on a computer. Therefore it is intended that the scope of protection extends to said computer program and further to computer readable means comprising a recorded message, said computer readable means comprising program coding means for carrying out one or more steps of the method, when said program is run on a computer.

From the above description, the person skilled in the art is able to realize the object of the invention without introducing further construction details.

## Claims

1. Integrated electric energy production system comprising a fixed coupling station (CST) and an agricultural tractor (VHE) equipped with an internal combustion engine (E), the station comprising an electric generator (G) having a rotor operatively connected with a transmission shaft (SH) provided with a flange, in such a way the flange is connectible with a PTO of the agricultural tractor (VHE) to drive in rotation said electric generator rotor
, wherein said fixed station comprises processing means (CU) operatively connected to said electric generator and comprising a data cable (CB) connectable with a vehicular data network (NET) of the agricultural vehicle (VHE);
the system is **characterized in that** said processing means (CU) are configured to interface with a processing unit (ECU) installed on board the agricultural vehicle to command the execution of at least one of the following procedures:
- activation of the agricultural vehicle parking brake,
- activation of the internal combustion engine (E) of the vehicle,
- switching off the vehicle internal combustion engine (E),
- monitoring of a vehicle driveline, commanding a shutdown or inhibition of the ignition of the internal combustion engine when a vehicle driveline is coupled with an output shaft of the internal combustion engine defining a travel configuration;
- monitoring of a vehicle transmission, commanding a neutral shift and inhibiting a shift in travel configuration before an activation of the agricultural vehicle internal combustion engine.

2. System according to claim 1, wherein said processing means (CU) are configured to force to said internal combustion engine an optimal working point according to an electric power required by at least one electric load (EUT1, EUT2 ,...) operatively connected to said electric generator (G) through a fixed electric network (EPN).

3. System according to any of the previous claims 1 or 2, wherein said fixed station comprises a first heat exchanger (HTE) arranged on a first (EP) and a second circuit (FL1), wherein said first circuit is open and includes an exhaust gas duct (EP) connectable to a muffler of said agricultural vehicle and wherein said second circuit (FL1) is able to circulate a carrier liquid through at least one thermal load (TUT1, TUT2, ...).

4. System according to claim 2, wherein said fixed station comprises a first heat exchanger (HTE) comprising a first and a second circuit, wherein said first circuit is open and includes an exhaust gas conduit (EP) connectable to a muffler of said vehicle and wherein said second circuit is able to circulate a carrier fluid necessary to heat at least one thermal user (TUT1, TUT2, ...) and wherein said processing means (CU) are configured to control said internal combustion engine and said electric generator (G) so as to obtain a predetermined thermal power available to said first heat exchanger (HTE).

5. System according to any one of the preceding claims 1 - 4, wherein said agricultural vehicle comprises a cooling system (CLS) of the internal combustion engine (E) comprising a circuit (CY) for the circulation of a coolant in which a radiator (RD) and a vehicular pump (VP) are arranged, the latter for circulating coolant liquid between the internal combustion engine (EO) and the radiator (RD) and wherein a second heat exchanger (AEXC) is interposed, in the circuit (CY) of circulation, between an output of the internal combustion engine (E) and an inlet of the radiator (RD) .

6. System according to Claim 5, wherein the said second heat exchanger comprises a pair of quick connectors to allow a connection of the second heat exchanger (AEXC) to a third circuit, adapted to circulate a further carrier liquid through at least one further thermal load (TUT3, TUT4, ...).

7. System according to claim 6, wherein said second heat exchanger (AEXC) is arranged inside an agricultural vehicle engine compartment so as to be inaccessible from the outside without accessing the engine compartment.

8. System according to claim 5, wherein said second heat exchanger (AEXC) comprises a pair of quick connectors to allow a connection of said second heat exchanger (AEXC) to said second circuit (FL1) so that said carrier liquid, needed to heat at least one thermal load (TUT1, TUT2, ...), is preheated in said second heat exchanger (AEXC) and post-heated in said first heat exchanger (HTE) before being sent to said at least one thermal load (TUT1, TUT2, ...).

9. System according to any one of claims 1 to 8, wherein the fixed coupling station (CST) further comprises electric energy storage means (ES) and/or thermal energy storage means (HS) and wherein said processing means (CU) are configured to control an accumulation of corresponding electrical and/or thermal energy in said respective storage means.

10. System according to claim 9, wherein said processing means (CU) are configured to control an accumulation of electric and/or thermal energy in said corresponding storage means according to an availability of said agricultural vehicle.

11. System according to claim 9 or 10, wherein said processing means (CU) are configured to control an accumulation of electric and/or thermal energy in said respective storage means according to a storage efficiency of said respective storage means.

12. System according to any one of claims 9 - 11, wherein said processing means (CU) are configured to acquire a schedule of the availability of said agricultural vehicle and to program the generation of said electric and/or thermal energy according to said schedule.

## Patentansprüche

1. Integriertes elektrisches Energieerzeugungssystem mit einer festen Kopplungsstation (CST) und einem landwirtschaftlichen Traktor (VHE), der mit einer Brennkraftmaschine (E) ausgestattet ist, wobei die Station einen elektrischen Generator (G) mit einem Rotor aufweist, der derart wirkend mit einer Antriebswelle (SH) verbunden ist, die mit einem Flansch versehen ist, dass der Flansch mit einer Zapfwelle (PTO) des landwirtschaftlichen Traktors (VHE) verbindbar ist, um den elektrischen Generator in Rotation zu versetzen,
wobei die feste Station Verarbeitungsmittel (CU), die wirkend mit dem elektrischen Generator verbunden sind, und ein Datenkabel (CB) aufweist, das mit einem fahrzeugseitigen Datennetzwerk (NET) des landwirtschaftlichen Fahrzeugs (VHE) verbindbar ist;
wobei das System **dadurch gekennzeichnet ist, dass** die Verarbeitungsmittel (CU) dazu eingerichtet sind, sich mit einer Verarbeitungseinheit (ECU) zu koppeln, die fahrzeugeigen in dem landwirtschaftlichen Fahrzeug installiert ist, um die Ausführung von mindestens einem der folgenden Vorgänge zu steuern,
- Aktivieren der Parkbremse des landwirtschaftlichen Fahrzeugs,
- Aktivieren der Brennkraftmaschine (E) des Fahrzeugs,
- Abstellen der Brennkraftmaschine (E) des Fahrzeugs,
- Überwachen eines Fahrzeugantriebstrangs, Steuern eines Abschaltens oder eines Hemmens der Zündung der Brennkraftmaschine, wenn ein Fahrzeugantriebstrang mit einer Ausgangswelle der Brennkraftmaschine gekoppelt ist, der eine Fahrkonfiguration definiert;
- Überwachen eines Fahrzeuggetriebes, Steuern einer Neutralschaltung und Hemmen eines Schaltens in eine Fahrkonfiguration vor einem Aktivieren der Brennkraftmaschine des landwirtschaftlichen Fahrzeugs.

2. System nach Anspruch 1, wobei die Verarbeitungsmittel (CU) dazu eingerichtet sind, die Brennkraftmaschine in einen optimalen Arbeitspunkt gemäß einer elektrischen Leistung, die von mindestens einer elektrischen Last (EUT1 , EUT2, ...) erfordert wird, die durch ein festes elektrisches Netzwerk (EPN) wirkend mit dem elektrischen Generator (G) verbunden ist, zu versetzen.

3. System nach einem der vorhergehenden Ansprüche 1 oder 2, wobei die feste Station einen ersten Wärmetauscher (HTE) aufweist, der an einem ersten (EP) und einem zweiten Kreislauf (FL1) angeordnet ist, wobei der erste Kreislauf offen ist und ein Abgasrohr (EP) umfasst, das mit einem Schalldämpfer des landwirtschaftlichen Fahrzeugs verbindbar ist, und wobei der zweite Kreislauf (FL1) dazu ausgebildet ist, eine Trägerflüssigkeit durch mindestens eine thermische Last (TUT1, TUT2, ...) zu zirkulieren.

4. System nach Anspruch 2, wobei die feste Station einen ersten Wärmetauscher (HTE) mit einem ersten und einem zweiten Kreislauf aufweist, wobei der erste Kreislauf offen ist und eine Abgasleitung (EP) umfasst, die mit einem Schalldämpfer des Fahrzeugs verbindbar ist, und wobei der zweite Kreislauf dazu ausgebildet ist, eine Trägerflüssigkeit, die notwendig ist, um mindestens einen thermischen Verbraucher (TUT1, TUT2, ...) zu erwärmen, zu zirkulieren, und wobei die Verarbeitungsmittel (CU) dazu eingerichtet sind, die Brennkraftmaschine und den elektrischen Generator (G) zu steuern, um eine vorbestimmte, verfügbare thermische Leistung an dem ersten Wärmetauscher (HTE) zu erzielen.

5. System nach einem der vorhergehenden Ansprüche 1 bis 4, wobei das landwirtschaftliche Fahrzeug ein Kühlsystem (CLS) der Brennkraftmaschine (E) mit einem Kreislauf (CY) zur Zirkulation eines Kühlmittels aufweist, in dem ein Kühler (RD) und eine fahrzeugseitige Pumpe (VP) angeordnet sind, wobei die letztere zur Zirkulation von Kühlflüssigkeit zwischen der Brennkraftmaschine (E) und dem Kühler (RD) vorgesehen ist, und wobei ein zweiter Wärmetauscher (AEXC) in dem Kreislauf (CY) der Zirkulation zwischen einem Ausgang der Brennkraftmaschine (E) und einem Eingang des Kühlers (RD) eingefügt ist.

6. System nach Anspruch 5, wobei der zweite Wärmetauscher ein Paar von Schnellverbindern aufweist, um eine Verbindung des zweiten Wärmetauschers (AEXC) an einen dritten Kreislauf, der dazu ausgebildet ist, eine weitere Trägerflüssigkeit durch mindestens eine weitere thermische Last (TUT3, TUT4, ...) zu zirkulieren, zu ermöglichen.

7. System nach Anspruch 6, wobei der zweite Wärmetauscher (AEXC) innerhalb eines Motorraums des landwirtschaftlichen Fahrzeugs angeordnet ist, um ohne Öffnen des Motorraums von außerhalb unzugänglich zu sein.

8. System nach Anspruch 5, wobei der zweite Wärmetauscher (AEXC) ein Paar von Schnellverbindern aufweist, um eine Verbindung des zweiten Wärmetauschers (AEXC) mit dem zweiten Kreislauf (FL1) zu ermöglichen, so dass die Trägerflüssigkeit, die zum Erwärmen mindestens einer thermischen Last (TUT1 , TUT2, ...) benötigt ist, in dem zweiten Wärmetauscher (AEXC) vorgewärmt und in dem ersten Wärmetauscher (HTE) nachgewärmt wird, bevor dieselbe zu der mindestens einen thermischen Last (TUT1, TUT2, ...) geleitet wird.

9. System nach einem der Ansprüche 1 bis 8, wobei die feste Kopplungsstation (CST) des Weiteren elektrische Energiespeichermittel (ES) und/oder thermische Energiespeichermittel (HS) aufweist und wobei die Verarbeitungsmittel (CU) dazu eingerichtet sind, ein Speichern jeweiliger elektrischer und/oder thermischer Energie in den entsprechenden Speichermitteln zu steuern.

10. System nach Anspruch 9, wobei die Verarbeitungsmittel (CU) dazu eingerichtet sind, ein Speichern von elektrischer und/oder thermischer Energie in den entsprechenden Speichermitteln gemäß einer Verfügbarkeit des landwirtschaftlichen Fahrzeugs zu steuern.

11. System nach Anspruch 9 oder 10, wobei die Verarbeitungsmittel (CU) dazu eingerichtet sind, ein Speichern von elektrischer und/oder thermischer Energie in den entsprechenden Speichermitteln gemäß einer Speichereffizienz des jeweiligen Speichermittels zu steuern.

12. System nach einem der Ansprüche 9 bis 11, wobei die Verarbeitungsmittel (CU) dazu eingerichtet sind, einen Zeitplan der Verfügbarkeit des landwirtschaftlichen Fahrzeugs zu erlangen und die Erzeugung der elektrischen und/oder thermischen Energie gemäß dem Zeitplan zu programmieren.

## Revendications

1. Système intégré de production d'énergie électrique comprenant une station d'accouplement fixe (CST) et un tracteur agricole (VHE) équipé d'un moteur à combustion interne (E), la station comprenant un générateur électrique (G) ayant un rotor fonctionnellement relié à un arbre de transmission (SH) muni d'une bride, de telle sorte que la bride peut être reliée à une prise de force du tracteur agricole (VHE) pour entraîner en rotation ledit rotor du générateur électrique,
dans lequel ladite station fixe comprend des moyens de traitement (CU) reliés de manière fonctionnelle audit générateur électrique et comprenant un câble de données (CB) pouvant être relié à un réseau de données véhiculaire (NET) du véhicule agricole (VHE) ;
le système est **caractérisé en ce que** lesdits moyens de traitement (CU) sont configurés pour s'interfacer avec une unité de traitement (ECU) installée à bord du véhicule agricole pour commander l'exécution d'au moins une des procédures suivantes :
- l'activation du frein de stationnement du véhicule agricole,
- l'activation du moteur à combustion interne (E) du véhicule,
- l'arrêt du moteur à combustion interne du véhicule (E),
- la surveillance de la chaîne d'entraînement d'un véhicule, la commande d'un arrêt ou l'inhibition de l'allumage du moteur à combustion interne lorsque la chaîne d'entraînement du véhicule est couplée à un arbre de sortie du moteur à combustion interne définissant une configuration de déplacement ;
- la surveillance de la transmission d'un véhicule, la commande d'un passage au point mort et l'inhibition d'un passage en configuration de déplacement avant l'activation du moteur à combustion interne du véhicule agricole.

2. Système selon la revendication 1, dans lequel lesdits moyens de traitement (CU) sont configurés pour imposer audit moteur à combustion interne un point de fonctionnement optimal en fonction d'une puissance électrique requise par au moins une charge électrique (EUT1, EUT2,... ) reliée de manière fonctionnelle audit générateur électrique (G) par l'intermédiaire d'un réseau électrique fixe (EPN).

3. Système selon l'une quelconque des revendications précédentes 1 ou 2, dans lequel ladite station fixe comprend un premier échangeur de chaleur (HTE) disposé sur un premier (EP) et un second circuits (FL1), dans lequel ledit premier circuit est ouvert et comprend un conduit de gaz d'échappement (EP) pouvant être relié à un silencieux dudit véhicule agricole et dans lequel ledit second circuit (FL1) est capable de faire circuler un liquide porteur à travers au moins une charge thermique (TUT1, TUT2,...).

4. Système selon la revendication 2, dans lequel ladite station fixe comprend un premier échangeur de chaleur (HTE) comprenant un premier et un second circuits, dans lequel ledit premier circuit est ouvert et comprend un conduit de gaz d'échappement (EP) pouvant être relié à un silencieux dudit véhicule et dans lequel ledit second circuit est capable de faire circuler un liquide porteur nécessaire pour chauffer au moins un utilisateur thermique (TUT1, TUT2, ...) et dans lequel lesdits moyens de traitement (CU) sont configurés pour commander ledit moteur à combustion interne et ledit générateur électrique (G) de manière à obtenir une puissance thermique prédéterminée disponible pour ledit premier échangeur de chaleur (HTE).

5. Système selon l'une quelconque des revendications précédentes 1 à 4, dans lequel ledit véhicule agricole comprend un système de refroidissement (CLS) du moteur à combustion interne (E) comprenant un circuit (CY) pour la circulation d'un liquide de refroidissement dans lequel sont disposés un radiateur (RD) et une pompe véhiculaire (VP), cette dernière pour faire circuler le liquide de refroidissement entre le moteur à combustion interne (EO) et le radiateur (RD) et dans lequel un second échangeur de chaleur (AEXC) est interposé, dans le circuit (CY) de circulation, entre une sortie du moteur à combustion interne (E) et une entrée du radiateur (RD).

6. Système selon la revendication 5, dans lequel ledit second échangeur de chaleur comprend une paire de connecteurs rapides pour permettre la connexion du second échangeur de chaleur (AEXC) à un troisième circuit, adapté pour faire circuler un autre liquide porteur à travers au moins une autre charge thermique (TUT3, TUT4, ...).

7. Système selon la revendication 6, dans lequel ledit second échangeur de chaleur (AEXC) est disposé à l'intérieur du compartiment moteur d'un véhicule agricole de manière à être inaccessible de l'extérieur sans accéder au compartiment moteur.

8. Système selon la revendication 5, dans lequel ledit second échangeur de chaleur (AEXC) comprend une paire de connecteurs rapides pour permettre une connexion dudit second échangeur de chaleur (AEXC) audit deuxième circuit (FL1) de sorte que ledit liquide porteur, nécessaire pour chauffer au moins une charge thermique (TUT1, TUT2, ...), est préchauffé dans ledit second échangeur de chaleur (AEXC) et post-chauffé dans ledit premier échangeur de chaleur (HTE) avant d'être envoyé à ladite au moins une charge thermique (TUT1, TUT2, ...).

9. Système selon l'une quelconque des revendications 1 à 8, dans lequel la station d'accouplement fixe (CST) comprend en outre des moyens de stockage de l'énergie électrique (ES) et/ou des moyens de stockage de l'énergie thermique (HS) et dans lequel lesdits moyens de traitement (CU) sont configurés pour commander une accumulation d'énergie électrique et/ou thermique correspondante dans lesdits moyens de stockage respectifs.

10. Système selon la revendication 9, dans lequel lesdits moyens de traitement (CU) sont configurés pour commander une accumulation d'énergie électrique et/ou thermique dans lesdits moyens de stockage correspondants en fonction d'une disponibilité dudit véhicule agricole.

11. Système selon la revendication 9 ou 10, dans lequel lesdits moyens de traitement (CU) sont configurés pour commander une accumulation d'énergie électrique et/ou thermique dans lesdits moyens de stockage respectifs en fonction d'une efficacité de stockage desdits moyens de stockage respectifs.

12. Système selon l'une quelconque des revendications 9 à 11, dans lequel lesdits moyens de traitement (CU) sont configurés pour acquérir un programme de la disponibilité dudit véhicule agricole et pour programmer la production de ladite énergie électrique et/ou thermique en fonction dudit programme.
